# EUROPÄISCHE PATENTANMELDUNG

(11) **EP 4 679 138 A1**
(43) Veröffentlichungstag der Anmeldung: **14.01.2026**
(21) Anmeldenummer: 24188351.1
(22) Anmeldetag: 12.07.2024
(51) Int. Cl.: G01S 15/08, G01S 15/931, G01S 7/527

(54) **VERFAHREN ZUR ULTRASCHALLABSTANDSMESSUNG**

(71) Anmelder: Elmos Semiconductor SE, 51379 Leverkusen (DE)
(72) Erfinder: Kraly, Rainer, 44227 Dortmund (DE)
(74) Vertreter: dompatent

(57) **Zusammenfassung**

Die Erfindung betrifft ein Verfahren (100) zur Abstandmessung unter Verwendung einer Ultraschall-Sensoreinheit (12), wobei das Verfahren (100) die nachfolgenden Schritte aufweist:
- Aussenden (110) von mindestens einem Ultraschallpuls (14) von der Ultraschall-Sensoreinheit (12) in Richtung eines Messobjektes (16);
- Empfangen (120) von mindestens einem, an dem Messobjekt (16) reflektierten Ultraschallpuls (18) durch die Ultraschall-Sensoreinheit (12);
- Erzeugen (130) eines Messsignals (20) auf Grundlage des mindestens einen empfangenen Ultraschallpulses (18);
- Auswerten (140) des Messsignals (20) und Bestimmen des Abstandes zwischen der Ultraschall-Sensoreinheit (12) und dem Messobjekt (16) unter Verwendung eines mittels Trainingsdaten trainierten Klassifikators oder Regressors.

## Beschreibung

Die vorliegende Erfindung betrifft ein Verfahren zur Abstandmessung unter Verwendung einer Ultraschall-Sensoreinheit. Zudem betrifft die Erfindung eine entsprechende Ultraschall-Sensoreinheit.

Ultraschall-Sensoreinheiten sind aus dem Stand der Technik weitläufig bekannt und werden in diversen Anwendungsszenarien eingesetzt. Beispielsweise sind in vielen modernen Personenkraftfahrzeugen ein oder mehrere Ultraschall-Sensoreinheiten vorgesehen, um den Abstand zu einem Objekt (insbesondere zu einem Fußgänger oder einem Fahrzeug) zu messen. Derartige Sensoreinheiten werden insbesondere in Parkassistenzsystemen verwendet, um das Ein- und Ausparken zu vereinfachen, indem der Abstand zu einem vorderen und einem hinteren Fahrzeug (oder einem anderen Objekt) gemessen wird, und optional ein Warnhinweis ausgegeben wird, sofern der Abstand einen vorgegebenen Mindestabstand unterschreitet.

Ultraschall-Sensoreinheiten sind in verschiedenen Ausführungsformen bekannt. Sie weisen eine Sende- und eine Empfangseinheit auf, die wahlweise separat oder integral in Form eines Transceivers ausgebildet sein können. Die Sendeeinheit ist dabei dazu ausgelegt, eine oder mehrere Ultraschallpulse in Richtung eines Messobjektes auszusenden. Die von dem Messobjekt reflektierten Ultraschallpulse werden durch die Empfangseinheit erfasst und es wird ein entsprechendes Messsignal erzeugt. Die genannten Sensoreinheiten weisen zudem eine Auswerteeinheit auf, die dazu vorgesehen ist, das erzeugte Messignal auszuwerten. Durch die Auswertung der Peaks innerhalb eines Messsignals kann unter der Kenntnis der Ausbreitungsgeschwindigkeit des Schalls sowie der Zeit, die ein Ultraschallpuls benötigt, um sich von der Sensoreinheit zum Messobjekt und wieder zurück zur Messeinheit zu bewegen, auf den Abstand zwischen der Sensoreinheit und dem Messobjekt geschlossen werden.

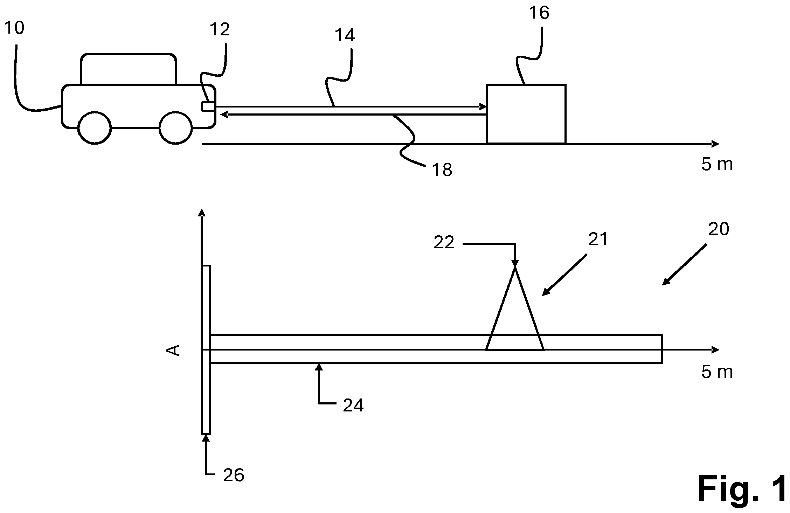

Ein Beispiel für eine Ultraschallabstandsmessung gemäß dem Stand der Technik ist in der Fig. 1 schematisch abgebildet. Ein Fahrzeug 10 weist dabei eine Ultraschall-Sensoreinheit 12 auf, die dazu ausgelegt ist, einen Ultraschallpuls 14 auszusenden. Der Ultraschallpuls 14 breitet sich mit der Schallgeschwindigkeit in Richtung eines Messobjektes 16 aus. Bei dem Messobjekt kann es sich beispielsweise um ein Fahrzeug (insbesondere um einen PKW oder ein Fahrrad), einen Fußgänger oder eine Wand handeln. An dem Messobjekt 16 wird der ausgesendete Ultraschallpuls 14 reflektiert. Der reflektierte Ultraschallpuls 18 wird von der Ultraschall-Sensoreinheit 12 erfasst, welches in Abhängigkeit von der Intensität des empfangenen Ultraschallpulses ein Messsignal 20 erzeugt. Der Ultraschallpuls legt also insgesamt eine Strecke zurück, die doppelt so groß ist wie der Abstand zwischen der Ultraschall-Sensoreinheit 12 (bzw. dem Fahrzeug) und dem Messobjekt 16. Das durch die Ultraschall-Sensoreinheit 12 erzeugte Messsignal 20 ist ebenfalls in der Fig. 1 (unten) abgebildet. Das Messignal 20 beschreibt die Amplitude (A) des reflektierten Ultraschallpulses 18 und weist ein Nutzsignal 21 mit einem Peak 22 auf, wobei die Position des Peaks 22 von dem Abstand zwischen der Ultraschall-Sensoreinheit 12 und dem Messobjekt 16 abhängig ist. Der Peak 22 wird zu einer Zeit empfangen, der unter Berücksichtigung der Schallgeschwindigkeit dem doppelten Abstand zwischen Ultraschall-Sensoreinheit 12 und Messobjekt 16 entspricht. Durch die Auswertung der Zeit, zu der der Peak empfangen wird, kann auf den Abstand zwischen Ultraschall-Sensoreinheit 12 und Messobjekt 16 geschlossen werden. Die Höhe des Peaks 20 ist abhängig von der Intensität des ausgesendeten Ultraschallpulses, von den Materialeigenschaften des Messobjektes (Reflektivität des Objektes) sowie von dem Abstand zwischen der Ultraschall-Sensoreinheit 12 und dem Messobjekt 16. Das Messsignal 20 weist zudem ein Rauschsignal 24 auf, das durch die intrinsischen Eigenschaften der Detektionseinheit der Ultraschall-Sensoreinheit 12 bedingt ist sowie durch sekundäre Reflektionen des Ultraschallpulses an der Bodenoberfläche und an diversen weiteren Oberflächen. Während die in der Fig. 1 beschriebene Abstandmessung in einem Bereich von > 50 cm sehr zuverlässig funktioniert, zeigt sich in der Praxis, dass sich eine Abstandsmessung für Messobjekte im Nahbereich, insbesondere in einem Abstand von < 50 cm, besonders in einem Abstand von < 20 cm und insbesondere in einem Abstand von < 10 cm, mit dem vorstehend beschriebenen Verfahren als schwierig erweist. Dies liegt daran, dass die Empfangseinheit der Ultraschall-Sensoreinheit 12 in einem Nahbereich 26 (im Rahmen der vorliegenden Erfindung auch als Totzone bezeichnet), die beispielsweise einen Abstand zwischen der Ultraschall-Sensoreinheit 12 und dem Messobjekt 16 von 0 bis 20 cm umfasst, in einen gesättigten Zustand übergeht. In diesem Nahbereich ist eine zuverlässige Ultraschallmessung gemäß dem in der Fig. 1 beschriebenen Verfahren nicht möglich.

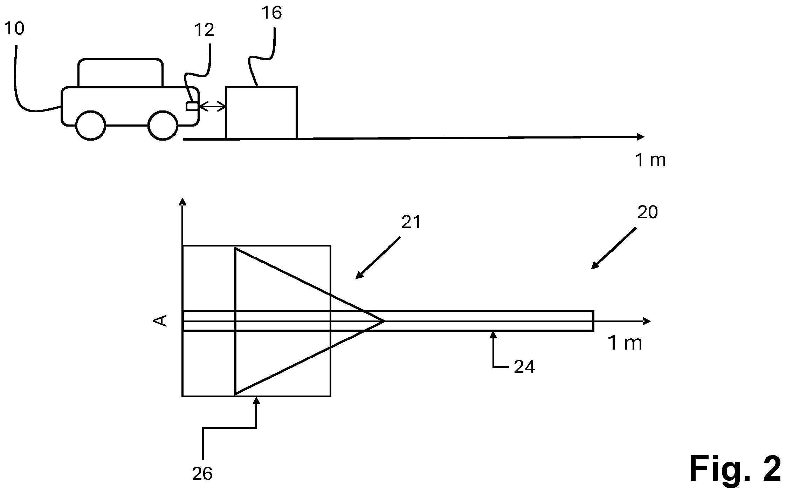

Das im Zusammenhang mit der Fig. 1 beschriebene Problem ist in der Fig. 2 verdeutlicht. In dem in der Fig. 2 dargestellten Szenario befindet sich das Messobjekt 16 im Nahbereich 26. Der Abstand zwischen der Ultraschall-Sensoreinheit 12 und dem Messobjekt 16 beträgt weniger als 50 cm (beispielsweise 10 bis 20 cm). Das Messsignal, das durch die Reflektion des Ultraschallpulses an dem Messobjekt 16 verursacht ist, wird durch das Signal, das aufgrund der Sättigung der Detektionseinheit der Ultraschall-Sensoreinheit 12 entsteht, überlagert. Daher kann mit dem in der Fign. 1 und 2 gezeigten Verfahren die genaue Position des Messobjektes in dem in der Fig. 2 gezeigten Szenario nicht ermittelt werden.

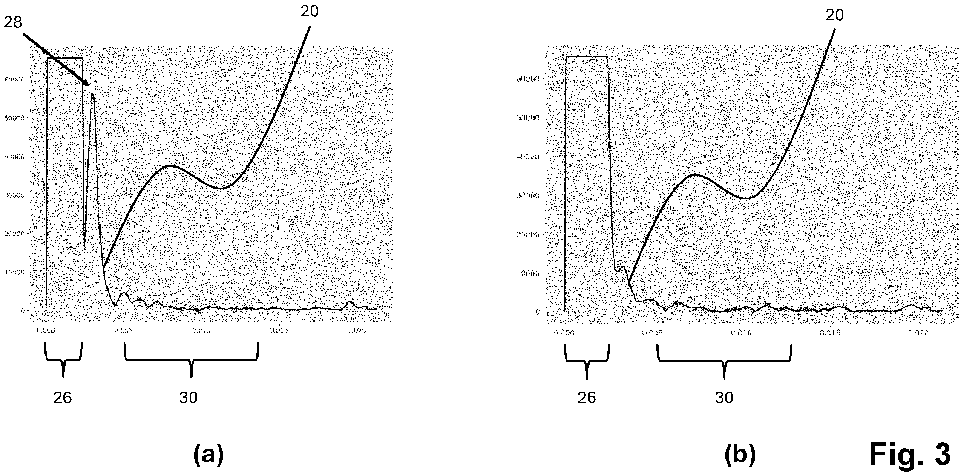

Zur weiteren Verdeutlichung der vorstehend beschrieben Problematik sind in der Fig. 3 Messsignale abgebildet, die mit dem in den Fign. 1 und 2 beschriebenen Verfahren aufgenommen wurden. In der Fig. 3 sind die Messsignale 20 für zwei Messungen wiedergegeben. Es wird jeweils ein US-Burst mit einem oder mehreren Pulsen gesendet. Diese Messsignale sind als Hüllkurvensignale ausgebildet.

Bei der ersten Messung, deren Messignal 20 in der Fig. 3 (a) abgebildet ist, ist eine Totzone bzw. der Nahbereich 26 (auch als Blindzone bezeichnet) zu erkennen. Peaks, die in diese Totzone fallen, können durch die aus dem Stand der Technik bekannten Messverfahren nicht ausgewertet werden, da diese Peaks in den gesättigten Bereich der Detektionseinheit fallen und daher kein detektierbares Signal liefern. Bei der ersten Messung ist zudem ein Mehrfachreflexionsbereich 30 (auch als Multireflexionsbereich bezeichnet) zu erkennen (siehe Fig. 3 (a)), in dem einzelne Peaks ausgebildet sind, die durch die Mehrfachreflexion der durch die Ultraschall-Sensoreinheit ausgesendeten Ultraschallimpulse verursacht werden. Diese Peaks werden bei den aus dem Stand der Technik bekannten Verfahren nicht ausgewertet. Das in der Fig. 3 (a) dargestellte Messignal 20 weist einen ersten Peak 28 auf, der bei den herkömmlichen Messverfahren durchaus ausgewertet werden kann, da sich dieser außerhalb der Totzone befindet. Dieses Peak wird zu einem Zeitpunkt detektiert, der einem Abstand zwischen der Ultraschall-Sensoreinheit und dem Messobjekt von 180 mm entspricht. Da das erste Peak 28 außerhalb der Totzone auftritt, kann der Abstand zwischen der Ultraschall-Sensoreinheit und dem Messobjekt bei dem aus dem Stand der Technik beschriebenen Verfahren korrekt ermittelt werden.

Hingegen ist in der Fig. 3 (b) das Messsignal 20 für eine zweite Messung gezeigt, wobei bei dieser Messung das erste Peak innerhalb der Totzone auftritt. In diesem Fall geht das Nutzsignal in dem Sättigungsbereich unter und es kann daher keine korrekte Ermittlung des Abstandes zwischen der Ultraschall-Sensoreinheit und dem Messobjekt erfolgen.

Wie vorstehend beschrieben, ist der Nachteil der aus dem Stand der Technik bekannten Verfahren zur Ultraschallabstandsmessung darin zu sehen, dass diese den Abstand zu Objekten im Nahbereich nicht zuverlässig messen können. Ausgehend von diesem Nachteil ist es Aufgabe der vorliegenden Erfindung, ein Verfahren zur Ultraschallabstandsmessung bereitzustellen, bei dem auch eine zuverlässige Abstandmessung im Nahbereich ermöglicht wird, wobei der Nahbereich bevorzugt einen Abstand zwischen der Ultraschall-Sensoreinheit und dem Messobjekt von 0 bis 50 cm, von 0 bis 20 cm oder von 0 bis 10 cm umfasst.

Zur Lösung der vorstehend beschriebenen Aufgabe wird mit der vorliegenden Erfindung ein Verfahren zur Abstandmessung unter Verwendung einer Ultraschall-Sensoreinheit vorgeschlagen, wobei das Verfahren die nachfolgenden Schritte aufweist:
- Aussenden von mindestens einem Ultraschallpuls von der Ultraschall-Sensoreinheit in Richtung eines Messobjektes;
- Empfangen von mindestens einem, an dem Messobjekt reflektierten Ultraschallpuls durch die Ultraschall-Sensoreinheit;
- Erzeugen eines Messsignals auf Grundlage mindestens einen empfangenen Ultraschallpulses; und
- Auswerten des Messsignals und Bestimmen des Abstandes zwischen der Ultraschall-Sensoreinheit und dem Messobjekt unter Verwendung eines mittels Trainingsdaten trainierten Klassifikators oder eines Regressors, welche die eine Schätzung des Abstands ermöglichen.

Durch den Einsatz des mit Trainingsdaten trainierten Klassifikators oder Regressors kann die charakteristische Form des Messsignals ausgewertet werden, wodurch der Abstand zwischen der Ultraschall-Sensoreinheit und dem Messobjekt bestimmt werden kann, und zwar auch innerhalb des Nahbereiches. Das erfindungsgemäße Verfahren bietet insofern einen innovativen Ansatz zur Ultraschallmessung, bei der das Problem der Sättigung des Messsignals umgangen wird, sodass der Messbereich, innerhalb dessen die Abstandmessung durchgeführt wird, auf den Nahbereich erweitert wird. Ein weiterer Vorteil der vorliegenden Erfindung liegt darin, dass durch das erfindungsgemäße Verfahren eine höhere Messdatenrate bereitgestellt werden kann, da durch das erfindungsgemäße Verfahren eine spezielle Kurzdistanzmessung eingespart werden kann.

Bei dem erfindungsgemäßen Verfahren können die Ultraschallpulse beispielsweise in Form von Ultraschallbursts ausgesendet werden, die jeweils 8, 16 oder n Einzelpulse aufweisen. Die am Messobjekt reflektierten Ultraschallpulse werden durch die Ultraschall-Sensoreinheit empfangen, wobei durch die Ultraschall-Sensoreinheit ein (Ultraschall-)Messsignal erzeugt wird, das die Amplitude der empfangenen Ultraschallpulse beschreibt. Das Erzeugen des Messignals kann die Generierung von (ungefilterten) Rohdaten umfassen, welche die Intensität und Phase der empfangenen Ultraschallpulse beschreiben. Alternativ kann das Erzeugen eines Messignals die Generierung eines Hüllkurvensignals umfassen.

Die Ultraschall-Sensoreinheit weist eine Sendeeinheit und eine Empfangseinheit auf, die wahlweise separat oder integral in Form eines Transceivers ausgebildet sein können. Die Sendeeinheit ist dabei dazu ausgebildet, Ultraschallpulse auszusenden, während die Empfangseinheit dazu ausgebildet ist, die am Messobjekt reflektierten Ultraschall-Pulse zu empfangen und entsprechend den empfangenen Ultraschall-Pulsen ein Messsignal zu erzeugen.

Das Messignal kann anschließend in den trainierten Klassifikator oder Regressors eingespeist werden, der während der Trainingsphase "gelernt" hat, den charakteristischen Verlauf des Messsignals für unterschiedliche Abstände zu erkennen. Dadurch nutzt der Klassifikator oder Regressor die während der Trainingsphase erlangte Kenntnis über die charakteristische Form der Messsignale aus, um anschließend in der Messphase auf den Abstand zwischen der Ultraschall-Sensoreinheit und dem Messobjekt zu schließen. Der Einsatz des Klassifikators oder Regressors ermöglicht es, auf die klassische Auswertung des Messsignals zu verzichten, welche insbesondere bei Messobjekten im Nahbereich (insbesondere < 50 cm oder < 20 cm) häufig zu Schwierigkeiten führt.

Bei dem erfindungsgemäßen Verfahren kann es vorgesehen sein, dass das Messsignal ein ungefiltertes Amplitudensignal, ein Hüllkurvensignal oder ein IQ-Signal umfasst. Das Amplitudensignal kann dabei unmittelbar die Intensität der empfangenen Ultraschallwellen über die Zeit wiedergeben. Das Amplitudensignal kann unmittelbar durch eine Ultraschall-Sensor erzeugt werden, wobei das empfangene Signal durch einen Analog-zu-Digital-Wandler in ein digitales Signal gewandelt werden kann. Für die Generierung des Hüllkurvensignals kann auf die aus dem Stand der Technik bekannten Ansätze zurückgegriffen werden. Beispielsweise kann hierzu ein Amplitudensignal verwendet werden, wobei die maximalen Amplituden (Peaks) des Amplitudensignals miteinander verbunden werden.

Bei einigen Ausführungsformen des erfindungsgemäßen Verfahrens kann es vorgesehen sein, dass der Klassifikator als ein künstliches neuronales Netz, als eine Support Vector Machine oder als ein Entscheidungsbaum ausgebildet ist. Zudem kann der Klassifikator als ein Naive Bayes Klassifikator oder ein k-Nearest Neighbours Klassifikator ausgebildet sein. Der Einsatz der vorstehend genannten Klassifikatoren erlaubt es, auf die klassische Analyse der Messdaten zu verzichten, wodurch die eingangs beschriebenen Probleme bei der Abstandmessung im Nahbereich vermieden werden.

Bei einigen Ausführungsformen des erfindungsgemäßen Verfahrens kann vorgesehen sein, dass ein Regressor verwendet wird, der als linearer Regressor oder als polynomialer Regressor ausgeführt ist.

Zudem kann bei einigen Ausführungsformen der Erfindung vorgesehen sein, dass der trainierte Klassifikator oder Regressor mit Trainingsdaten trainiert ist, wobei die Trainingsdaten Messsignale sowie den Messsignalen zugeordnete Abstandswerte aufweisen. Die Messsignale können dabei Amplitudensignale, Hüllkurvensignale oder IQ-Signale (In-Phase-&-Quadature-Signale) aufweisen. Beispielsweise kann einem ersten Messignal ein Abstandswert von 5 cm zugeordnet sein, während einem zweiten Messsignal ein Abstandswert von 8 cm zugeordnet ist, usw. Die Trainingsdaten können mehrere tausend Messsignale mit entsprechend zugeordneten Abstandswerten aufweisen, wodurch der Klassifikator während einer Trainingsphase trainiert werden kann und während der Trainingsphase lernt, welche Messignale bzw. welche charakteristische Form der Messsignale welchen Abstandswerten zuzuordnen sind. Insbesondere kann der Klassifikator dabei lernen, die durch Mehrfachreflexion verursachten Charakteristika der Messignale auszuwerten und dadurch auf den Abstand zwischen der Ultraschall-Sensoreinheit und dem Messobjekt zu schließen.

Ferner wird zur Lösung der eingangs beschriebenen Aufgabe mit der vorliegenden Erfindung ein Verfahren zur Abstandmessung unter Verwendung einer Ultraschall-Sensoreinheit vorgeschlagen, wobei das Verfahren die nachfolgenden Schritte aufweist:
- Trainieren eines Klassifikators, wobei der Klassifikator bevorzugt als künstliches neuronales Netz ausgebildet ist;
- Aussenden von mehreren Ultraschallpulsen von der Ultraschall-Sensoreinheit in Richtung eines Messobjektes;
- Empfangen von an dem Messobjekt reflektierten Ultraschallpulsen durch die Ultraschall-Sensoreinheit;
- Erzeugen eines Messsignals auf Grundlage der empfangenen Ultraschallpulse; und
- Auswerten des Messsignals und Bestimmen des Abstandes zwischen der Ultraschall-Sensoreinheit und dem Messobjekt unter Verwendung eines mittels Trainingsdaten trainierten Klassifikators.

Insbesondere kann das Trainieren des Klassifikators oder des Regressors die nachfolgenden Schritte aufweisen:
- Trainieren des Klassifikators oder des Regressors unter Verwendung von Trainingsdaten, wobei die Trainingsdaten Ultraschall-Messdaten sowie den Messdaten zugeordnete Abstandswerte aufweisen.

Bei einigen bevorzugten Ausführungsformen des erfindungsgemäßen Verfahrens kann es vorgesehen sein, dass die Trainingsdaten Ultraschall-Messdaten aufweisen, welche die Amplitude empfangener Ultraschallpulse in Abhängigkeit von der Zeit beschreiben. Dabei kann es bevorzugt vorgesehen sein, dass die Ultraschall-Messdaten aus den von der Ultraschall-Sensoreinheit erzeugten Roh-Messdaten extrahiert sind. Insbesondere kann es vorgesehen sein, dass die Roh-Messdaten durch einen Vektor umfassend N Messwerte beschrieben werden können und dass die für das Trainieren des Klassifikators oder des Regressors verwendeten Ultraschall-Messdaten aus dem Vektor extrahiert sind, indem die ersten M Werte des Vektors unberücksichtigt bleiben. M kann dabei insbesondere 10 %, 15 % oder 20 % von N betragen. Wie im Zusammenhang mit den Fign. 1 bis 3 erläutert wurde, enthalten die ersten Werte des Messsignals keine für die Auswertung relevanten Informationen, da sie lediglich den gesättigten Zustand der Detektionseinheit einer Ultraschall-Sensoreinheit wiedergeben. Durch die Extraktion der Ultraschall-Messdaten aus den Roh-Messdaten und das Verwerfen des Teils des Messignals, der die Totzone betrifft, können kompakte Ultraschall-Messdaten bereitgestellt werden, wodurch der Trainingsprozess insgesamt effizienter gestaltet wird. Dies ist insbesondere dann von Vorteil, wenn die Trainingsdaten mehrere 1.000 oder mehrere 10.000 Messsignale umfassen. In diesem Fall kann die benötigte Trainingszeit signifikant reduziert werden.

Zudem kann bei dem erfindungsgemäßen Verfahren vorgesehen sein, dass die Trainingsdaten Messignale aufweisen, die jeweils ein ungefiltertes Amplitudensignal, ein Hüllkurvensignal oder ein IQ-Signal umfasst. Während die vorliegende Erfindung nicht auf die vorstehend genannten Messignale zum Trainieren des Klassifikators oder des Regressors beschränkt ist, konnte in ersten Untersuchungen gezeigt werden, dass die Verwendung von ungefilterten Amplitudensignalen, Hüllkurvensignalen und IQ-Signalen zu einer präzisen Klassifizierung der Messdaten und folglich zu einer präzisen Abstandmessung führen.

Bei einigen Ausführungsformen des erfindungsgemäßen Verfahrens kann es vorgesehen sein, dass die Trainingsdaten Messignale sowie den Messignalen zugeordnete Abstandswerte umfassen, wobei die Messignale mehrere Peaks aufweisen, die Mehrfachreflexionen der durch die Ultraschall-Sensoreinheit ausgesendeten Ultraschallspulse wiedergeben. Dadurch können Informationen über eine Mehrfachreflexion dazu genutzt werden, um den Abstand zwischen einer Ultraschall-Sensoreinheit und einem Messobjekt im Nahbereich zu ermitteln. Sofern der Klassifikator oder der Regressor mit Messsignalen trainiert ist, die mehrere (die Mehrfachreflexionen wiedergebende) Peaks aufweisen, sollten selbstredend auch die Messsignale, die während der Messphase in den Klassifikator eingespeist werden, ebenfalls entsprechend Messignale aufweisen, welche mehrere Peaks aufweisen, die Mehrfachreflexionen wiedergeben.

Zudem kann es bei dem erfindungsgemäßen Verfahren vorgesehen sein, dass das Verfahren eingesetzt wird, um den Abstand zwischen einer Ultraschall-Sensoreinheit und einem Messobjekt in einem Nahbereich zu bestimmen, wobei der Nahbereich einen Abstand zwischen der Ultraschall-Sensoreinheit und einem Messobjekt von 0 cm bis 50 cm, bevorzugt von 0 cm bis 20 cm und besonders bevorzugt von 0 cm bis 10 cm umfasst. Es zeigt sich, dass die nach dem Stand der Technik bekannten Verfahren insbesondere im Nahbereich zu Messfehlern führt. Durch den Einsatz des erfindungsgemäßen Verfahrens wird eine zuverlässigere Abstandsmessung im Nahbereich ermöglicht.

Bei dem erfindungsgemäßen Verfahren kann es insbesondere vorgesehen sein, dass das Verfahren zur Bestimmung eines Abstandes zwischen einem Fahrzeug und einem Messobjekt verwendet wird. Dabei kann die Ultraschall-Sensoreinheit bevorzugt in das Fahrzeug integriert sein. Insbesondere kann es dabei vorgesehen sein, dass die Ultraschall-Sensoreinheit in eine Stoßstange des Fahrzeuges integriert ist. Bei dem erfindungsgemäßen Verfahren kann es vorgesehen sein, dass die Ultraschall-Sensoreinheit als Hecksensor, als Frontsensor oder als ein Seitensensor implementiert ist.

Zudem kann es bei dem erfindungsgemäßen Verfahren vorgesehen sein, dass das Verfahren als ein computerimplementiertes oder als ein maschinenimplementiertes Verfahren realisiert ist. Bei einer computerimplementierten Realisierung der Erfindung kann es vorgesehen sein, dass die vorstehend beschriebenen Verfahrensschritte durch eine Recheneinheit ausgeführt werden, wobei die Implementierung durch ein Computerprogrammprodukt erfolgt. Bei einer Maschinenimplementierung der vorliegenden Erfindung kann es vorgesehen sein, dass die Verfahrensschritte durch den Einsatz von Hardwarekomponenten, insbesondere durch den Einsatz von logischen Gattern, realisiert wird.

Ferner wird zur Lösung der eingangs beschriebenen Aufgabe eine Ultraschall-Sensoreinheit zur Messung eines Abstandes zu einem Messobjekt vorgeschlagen, wobei die Ultraschall-Sensoreinheit Folgendes aufweist:
- eine Sendeeinheit zum Aussenden von mehrere Ultraschallpulsen;
- eine Empfangseinheit zum Empfangen von an dem Messobjekt reflektierten Ultraschallpulsen; und
- eine Auswerteeinheit, die dazu ausgelegt ist:
   - ein Messsignal auf Grundlage der empfangenen Ultraschallpulse zu erzeugen; und
   - unter Verwendung eines mittels Trainingsdaten trainierten Klassifikators oder Regressors das Messignal auszuwerten und den Abstand zu dem Messobjekt zu bestimmen.

Bei der erfindungsgemäßen Ultraschall-Sensoreinheit kann es vorgesehen sein, dass die Sendeeinheit und Empfangseinheit wahlweise als separate Einheiten oder aber auch als eine integrale Sende- und Empfangseinheit (Transceiver) ausgeführt sind.

Bei der erfindungsgemäßen Ultraschall-Sensoreinheit kann es vorgesehen sein, dass die Auswerteeinheit dazu ausgelegt ist, ein Messsignal in Form eines ungefiltertes Amplitudensignals, eines Hüllkurvensignal oder eines IQ-Signal zu erzeugen und unter Verwendung des Klassifikators dieses Messsignal auszuwerten und den Abstand zu dem Messobjekt zu bestimmen.

Bei einigen Ausführungsformen der Ultraschall-Sensoreinheit kann es zudem vorgesehen sein, dass der Klassifikator als ein künstliches neuronales Netz, eine Support Vector Machine oder als ein Entscheidungsbaum ausgebildet ist.

Ferner kann es bei der erfindungsgemäßen Ultraschall-Sensoreinheit vorgesehen sein, dass der Klassifikator mit Trainingsdaten trainiert ist, wobei die Trainingsdaten Messignale sowie den Messignalen zugeordnete Abstandswerte umfassen, und die Messignale mehrere Peaks aufweisen, die eine Mehrfachreflexion der durch die Ultraschall-Sensoreinheit ausgesendeten Ultraschallspulse darstellen.

Auch kann es bei der erfindungsgemäßen Ultraschall-Sensoreinheit vorgesehen sein, dass die Auswerteeinheit dazu ausgelegt ist, den Abstand zu einem Messobjekt in einem Nahbereich zu bestimmen, wobei der Nahbereich einen Abstand zwischen der Ultraschall-Sensoreinheit und einem Messobjekt in einem Bereich von 0 cm bis 50 cm, bevorzugt von 0 cm bis 20 cm und besonders bevorzugt von 0 cm bis 10 cm umfasst.

Zudem wird zur Lösung der eingangs beschriebenen Aufgabe ein Computerprogrammprodukt vorgeschlagen, das Computeranweisungen aufweist, die von einer Recheneinheit ausführbar sind, wobei die Computeranweisungen bewirken, dass die Recheneinheit die Schritte eines der vorstehend beschriebenen Verfahren durchführt, wenn sie durch die Recheneinheit ausgeführt werden.

Die vorliegende Erfindung wird nachfolgend anhand der Figuren näher erläutert. Dabei zeigen die
- Fig. 1: ein Verfahren zur Ultraschallabstandsmessung gemäß dem Stand der Technik,
- Fig. 2: das in der Fig. 1 beschriebene Verfahren im Falle eines im Nahbereich befindlichen Messobjektes,
- Fig. 3: mit dem in den Fign. 1 und 2 beschriebenen Verfahren aufgenommene Messsignale,
- Fig. 4: eine schematische Darstellung des erfindungsgemäßen Verfahrens,
- Fig. 5: eine schematische Darstellung des Trainingsprozesses für das Trainieren eines Klassifikators gemäß dem erfindungsgemäßen Verfahren,
- Fig. 6: eine schematische Darstellung der Abstandsmessung unter Verwendung eines trainierten Klassifikators gemäß dem erfindungsgemäßen Verfahren, und
- Fig. 7: eine schematische Darstellung der erfindungsgemäßen Ultraschall-Sensoreinheit.

Die Fign. 1 bis 3 beschreiben ein Verfahren zur Ultraschallabstandsmessung gemäß dem Stand der Technik und wurden eingangs im Detail erläutert.

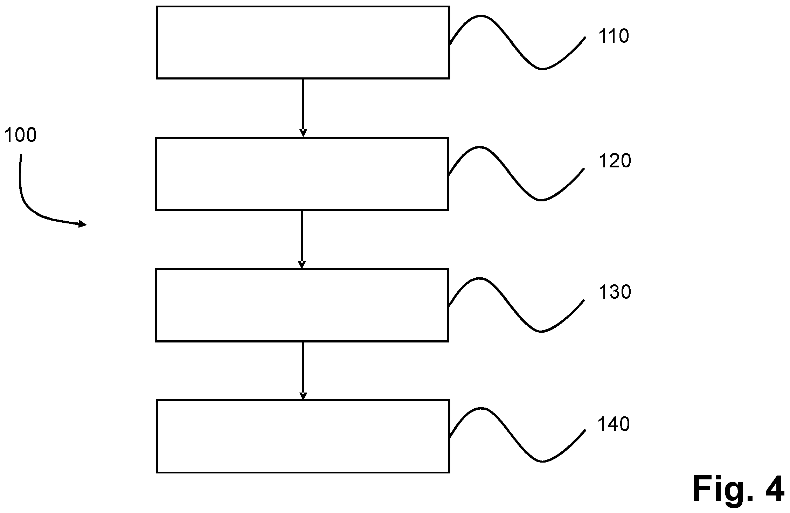

In der Fig. 4 ist ein Ausführungsbeispiel des erfindungsgemäßen Verfahrens 100 zur Abstandmessung unter Verwendung einer Ultraschall-Sensoreinheit schematisch dargestellt. Bei diesem Ausführungsbeispiel werden in einem ersten Verfahrensschritt 110 mehrere Ultraschallpulse von der Ultraschall-Sensoreinheit in Richtung eines Messobjektes ausgesendet. Die ausgesendeten Ultraschallpulse werden anschließend an einer Oberfläche des Messobjektes reflektiert und in einem zweiten Verfahrensschritt 120 von der Ultraschall-Sensoreinheit erfasst. In einem dritten Verfahrensschritt 130 erzeugt die Ultraschall-Sensoreinheit ein Messignal auf Grundlage der empfangenen Ultraschallpulse. Das Messignal kann als ein ungefiltertes Amplitudensignal ausgebildet sein. Alternativ kann es beispielsweise vorgesehen sein, dass die Ultraschall-Sensoreinheit ein Hüllkurvensignal erzeugt. In einem vierten Verfahrensschritt 140 wird das erzeugte Messsignal ausgewertet und der Abstand zwischen der Ultraschall-Sensoreinheit und dem Messobjekt bestimmt. Für die Auswertung und die Abstandsbestimmung wird ein Klassifikator verwendet, der mit Trainingsdaten trainiert ist. Die Trainingsdaten können insbesondere Messsignale sowie den Messignalen zugeordnete Abstandwerte aufweisen. Dadurch kann der Klassifikator während eines Trainingsprozesses "lernen" welchen Messignale welchen Abstandswerten korrelieren. Dieser Prozess wird auch als überwachtes Lernen ("supervised learning") bezeichnet. Während der Messphase wird ein Messsignal in den trainierten Klassifikator eingespeist, wobei der Klassifikator einen Abstandswert ausgibt, der dem eingegeben Messsignal zuzuordnen ist. Dabei kann der Klassifikator insbesondere die charakteristischen Verläufe der Messsignale nutzen, die durch die Mehrfachreflexion der Ultraschallpulse entsteht. Bei dem erfindungsgemäßen Verfahren wird daher nicht lediglich ein erster Peak detektiert und ausgewertet, sondern stattdessen alle Informationen, die in einem Messsignal enthalten sind. Dadurch wird es ermöglicht, eine zuverlässige Abstandsmessung bereitzustellen, die auch bei Messungen im Nahbereich verlässliche Messergebnisse liefert.

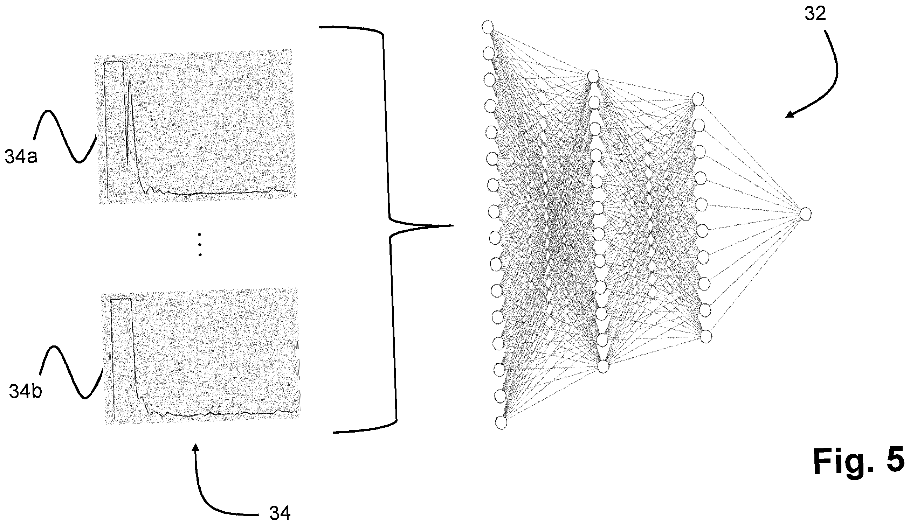

In der Fig. 5 ist der Trainingsprozess für das Trainieren eines Klassifikators gemäß einer Ausführungsform des erfindungsgemäßen Verfahrens schematisch dargestellt. In dem in der Fig. 5 gezeigten Ausführungsbeispiel ist ein künstliches neuronales Netz (auch als artificial neural network oder ANN bezeichnet) eingesetzt. Während des Trainingsprozesses können Trainingsdaten 34 verwendet werden, um das künstliche neuronale Netz zu trainieren. Die Trainingsdaten 34 können mehrere Messsignale sowie den Messsignalen zugeordnete Abstandswerte aufweisen. Beispielsweise können die Trainingsdaten 34 mehrere tausend oder zehntausend Messsignale aufweisen und entsprechende Abstandswerte, die jeweils den Abstand zwischen dem Messobjekt und der Ultraschall-Sensoreinheit bei der jeweiligen Messung wiedergeben. Im Allgemeinen gilt, dass der Klassifikator eine höhere Präzision aufweist, je umfangreicher die Trainingsdaten 34 sind, die während des Trainingsprozesses verwendet wurden. Zudem ist es selbstredend, dass die Messdaten (Messsignale), die während der Abstandsmessung verwendet wurden, vom gleichen Typ sein sollten, wie die Messsignale, die während des Trainingsprozesses verwendet wurden. Wurde der Klassifikator beispielsweise mit Hüllkurvensignalen (sowie den Hüllkurvensignalen zugeordneten Abstandswerten trainiert), so sollten im Messprozess ebenfalls Hüllkurvensignale verwendet werden, die in den Klassifikator eingespeist werden. Gemäß einigen Ausführungsformen kann es vorgesehen sein, dass das künstliche neuronale Netz 32 mit Trainingsdaten 34 trainiert wird, die ein gesamtes Messignal umfassen.

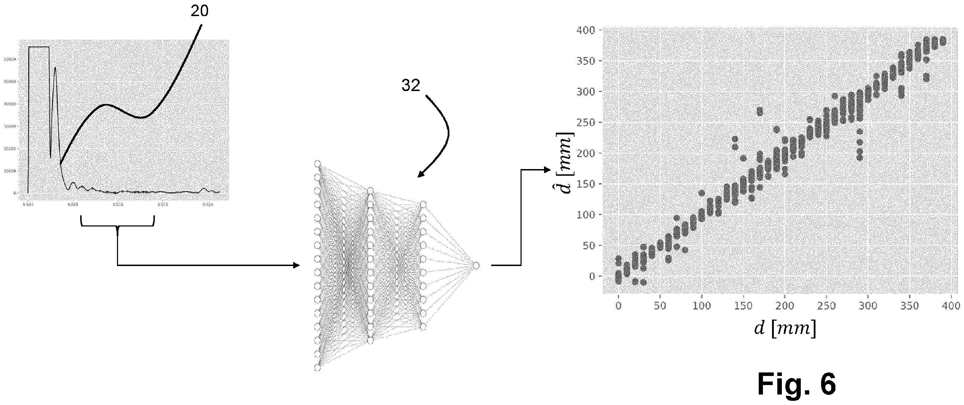

In der Fig. 6 ist die Abstandsmessung unter Verwendung eines trainierten Klassifikators gemäß einem Ausführungsbeispiel des erfindungsgemäßen Verfahrens schematisch dargestellt. Bei diesem Ausführungsbeispiel wird durch die Ultraschall-Sensoreinheit ein Messignal 20 erzeugt, wie dies vorstehend im Detail beschrieben wurde. Das Messsignal 20, das vorliegend als Hüllkurvensignal ausgebildet ist, wird anschließend in einen zuvor trainierten Klassifikator, der in dem in der Fig. 6 gezeigten Ausführungsbeispiel als künstliches neuronales Netz 32 ausgeführt ist, eingespeist. Der Klassifikator wurde zuvor, wie im Zusammenhang mit der Fig. 5 beschrieben, mit Trainingsdaten trainiert und wertet während der Messphase das eingespeiste Messsignal 20 aus. Anschließend gibt der Klassifikator einen Abstandswert aus, der dem in dem Messsignal 20 enthaltenen Muster mit der höchsten Wahrscheinlichkeit zugeordnet werden kann. In der rechten Abbildung der Fig. 6 ist der mit dem erfindungsgemäßen Verfahren ermittelte Abstand (*d̂*) gegenüber dem tatsächlichen Abstand (d) zwischen dem Messobjekt und der Ultraschall-Sensoreinheit abgebildet. Wie dieser Abbildung zu entnehmen ist, kann mit dem erfindungsgemäßen Verfahren eine recht zuverlässige Abstandsmessung in einem Nahbereich bereitgestellt werden, wobei der Nahbereich in dem vorliegenden Beispiel einen Abstand zwischen dem Ultraschall-Sensor von ca. 0 cm bis 40 cm umfasst.

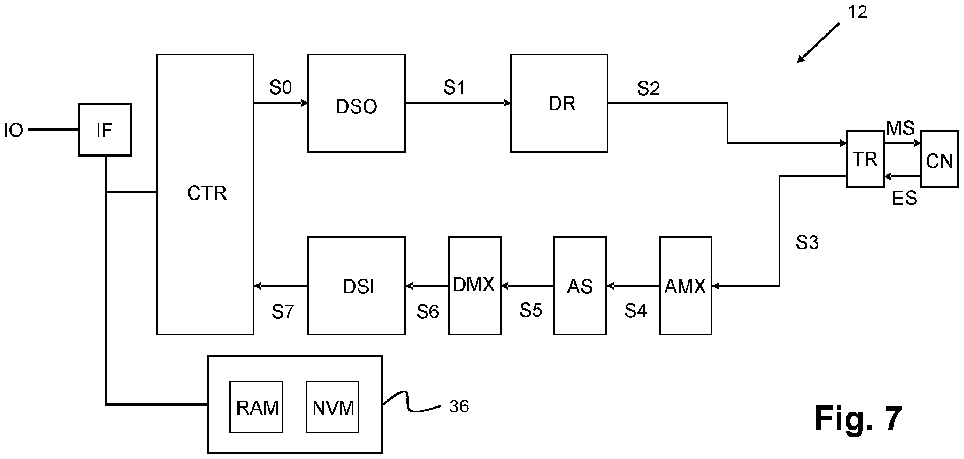

In der Fig. 7 ist ein Ausführungsbeispiel der erfindungsgemäßen Ultraschall-Sensoreinheit 12 schematisch dargestellt. Die Ultraschall-Sensoreinheit 12 weist eine Steuereinrichtung CTR auf, die dazu ausgelegt ist, über eine Datenschnittstelle IF Daten, Programme und/oder Befehle von anderen, typischerweise höherrangigen Rechnern zu empfangen. Bei diesen höherrangigen Rechnern kann es sich beispielsweise um ein Steuergerät eines Kfz handeln, das die gezeigte Ultraschall-Sensoreinheit 12 steuert und kontrolliert. Die Kommunikation mit den Rechnern kann über eine Datenschnittstelle IF (interface) erfolgen. Die Ultraschall-Sensoreinheit 12 verfügt ferner über eine Speichereinheit 36, die mehrere Speicherelemente RAM (random-access memory) und NVM (non-volatile memory) aufweisen kann. Der Klassifikator, der insbesondere als künstliches neuronales Netz ausgebildet sein kann, kann insbesondre in dem Speicherelement NVM hinterlegt sein. Die auszuwertenden Messsignale können bevorzugt im RAM zwischengespeichert werden. Die Messdaten bzw. Messsignale können beispielsweise durch die Steuereinrichtung CTR ausgewertet werden, die eine Recheneinheit aufweist. Alternativ können die Messdaten auch durch den Eingangsschaltkreis DSI ausgewertet werden, der ebenfalls über eine Recheneinheit verfügt. Auch kann es vorgesehen sein, dass die Ultraschall-Sensoreinheit 12 insgesamt über zwei Recheneinheiten verfügt, wobei eine erste Recheneinheit in der Steuereinrichtung CTR enthalten ist und eine zweite Recheneinheit in dem Eingangsschaltkreis DSI vorgesehen ist. Dabei kann die erste Recheneinheit für die Kommunikation mit anderen Rechnern vorgesehen sein, während die zweite Recheneinheit für die Analyse und Auswertung der Messdaten verwendet wird.

Die Steuereinrichtung CTR kann an den höherrangigen Rechner ermittelte Messwerte, Fehlermeldungen und Prüfergebisse übermitteln. Die Steuereinrichtung CTR steuert über ein Ansteuersignal S0 die Digitalsignal-Erzeugungseinheit DSO. Darüber hinaus konfiguriert die Steuereinrichtung CTR bevorzugt alle anderen konfigurierbaren Teilvorrichtungen der Ultraschall-Sensoreinheit 12. Die entsprechenden Steuerleitungen und Signale sind zur besseren Übersicht in der Fig. 7 nicht eingezeichnet.

Das Ansteuersignal S0 ist bevorzugt ein Datenbus aus mehreren digitalen Signalen. In Abhängigkeit von der Vorgeschichte und dem Ansteuersignal S0 erzeugt die Digitalsignal-Erzeugungseinheit DS0 Stimuli sowie Nutz-, Mess- und Prüfsignale für die nachfolgende Signalpfadkette aus den im Signalpfad nachfolgenden Teilvorrichtungen der Ultraschall-Sensoreinheit 12. Es wird also vorgeschlagen, die Digitalsignal-Erzeugungseinheit DSO so zu gestalten, dass sie sowohl als Messsignalgenerator, als auch als Prüfsignalgenerator als auch als Test-Muster-Generator dienen kann. Die Digitalsignal-Erzeugungseinheit DSO erzeugt die Stimuli, Nutz-, Mess- und Prüfsignale für die nachfolgende Signalpfadkette als erstes digitales Signal S1. Das erste digitale Signal S1 ist bevorzugt ein digitaler Datenbus. Es kann sein, dass in einigen Zuständen der erlaubten Zustände der Ultraschall-Sensoreinheit 12 einige Leitungen des ersten digitalen Signals S1 keine Aktivität zeigen, die jedoch in anderen erlaubten Zuständen der Ultraschall-Sensoreinheit 12 aktiv sind.

Die Treiberstufe DR erzeugt in Abhängigkeit von dem ersten digitalen Signal S1 das zweite analoge Signal S2. Die Treiberstufe DR führt also eine Wandlung des ersten digitalen Signals S1 in ein analoges zweites Signal S1 um. Das zweite analoge Signal S2 kann aus mehreren zweiten analogen Teilsignalen bestehen. Auch hier sind nicht notwendigerweise alle Teilsignale des zweiten analogen Signals S2 in allen Zuständen der Ultraschall-Sensoreinheit 12 aktiv.

Dabei muss es sich nicht unbedingt nur um eine Digital-zu-Analogwandlung eines digitalen Wertes handeln, der mittels des ersten digitalen Signals S1 an die Treiberstufe DR übermittelt wurde. Vielmehr kann die Treiberstufe auch komplexere, gegebenenfalls rückgekoppelte Schaltungen umfassen, die ihre aktive Topologie in Abhängigkeit vom Zustand der Ultraschall-Sensoreinheit 12 und gegebenenfalls von dem aktuellen Zeitpunkt innerhalb einer Sende/Empfangssequenz ändert. Beispielsweise ist es möglich, eine solche Sende-/Empfangssequenz für Ultraschall-Sensoreinheiten in drei Phasen einzuteilen. In der ersten Phase der beispielhaften Sendesequenz (Ultraschallsequenz), auch als Sendephase bezeichnet, wird der beispielhafte Ultraschalltransducer TR zum mechanischen Schwingen und damit zum Aussenden eines Ultraschallpulses als Ausgangssignal MS in den beispielhaften Ultraschallmesskanal CN angeregt. In dieser ersten Phase, der Sendephase, beaufschlagt die Treiberstufe DR den Ultraschalltransducer TR mit einem Messstimulus entsprechend der Ultraschallsendefrequenz. Die Treiberstufe DR transportiert dann Energie in den Ultraschalltransducer TR.

In einer zweiten, zeitlich nachfolgenden Phase, der Ausschwingphase, beaufschlagt die Treiberstufe DR den Ultraschalltransducer TR mit einem Messstimulus, der der Schwingfrequenz des noch schwingenden Ultraschalltransducers entgegengerichtet ist. Hierdurch wird die Schwingung des Ultraschalltransducers TR bedämpft. Die Treiberstufe DR entnimmt dann Energie aus dem Ultraschalltransducer TR. In dieser Phase emittiert der Ultraschalltransducer TR ein Ausgangssignal MS in den Ultraschallmesskanal CN in den Außenbereich außerhalb der Ultraschall-Sensoreinheit 12 bei sinkender Abstrahlamplitude hinein. Im Ultraschallkanal CN im Außenbereich außerhalb der Ultraschall-Sensoreinheit 12 befinden sich typischerweise ein oder mehrere Objekte, die typischerweise ein stark bedämpftes, verzögertes und verzerrtes Echo des Ultraschallmesssignals erzeugen. Dieses wird im Folgenden mit Ultraschallempfangssignal ES bezeichnet. In der dritten Phase, der Empfangsphase, wird der Ultraschalltransducer TR durch die Treiberstufe DR nicht angetrieben. Die Treiberstufe DR entnimmt keine Energie aus dem Ultraschalltransducer TR, transportiert aber auch keine Energie in den Ultraschalltransducer TR hinein. In dieser Phase, der Empfangsphase, kann der Ultraschalltransducer TR sehr gut ein Ultraschallecho als Empfangssignal (Ultraschallempfangssignal) ES empfangen. Der Ultraschalltransducer TR wird durch das Ultraschallempfangssignal ES in Schwingungen versetzt und erzeugt aufgrund seiner piezoelektrischen Eigenschaften das dritte analoge Signal S3. Das dritte analoge Signal S3 kann aus mehreren analogen Teilsignalen bestehen.

Ein analoger Multiplexer AMX schaltet das dritte analoge Signal S3 als viertes analoges Signal S4 in einem vorgegebenen Zustand der Ultraschall-Sensoreinheit 12 durch. Welches Signal durch den analogen Multiplexer AMX durchgeschaltet wird, hängt vom Zustand der Ultraschall-Sensoreinheit 12 ab. Typischerweise wird der analoge Multiplexer AMX durch die Steuereinrichtung CTR gesteuert, die bevorzugt den Zustand und die Konfiguration der Ultraschall-Sensoreinheit 12 steuert und kontrolliert. Auch hier sind nicht notwendigerweise alle Teilsignale des vierten analogen Signals S4 in allen Zuständen der Ultraschall-Sensoreinheit 12 aktiv. Der analoge Eingangsschaltkreis AS empfängt das vierte analoge Signal S4. Dieser Empfang kann von dem Ansteuersignal S0 und dem Zustand der Ultraschall-Sensoreinheit 12 sowie weiteren Faktoren abhängen. Wie der Empfang durch den analogen Eingangsschaltkreis AS exakt erfolgt, wird bevorzugt durch die Steuereinrichtung CTR mittels entsprechender, nicht eingezeichneter Steuersignale vorgegeben. Bevorzugt korreliert die Empfangsmethodik im analogen Eingangsschaltkreis AS mit dem verwendeten Stimulus oder Mess- oder Prüfsignal, das durch die Digitalsignal-Erzeugungseinheit DSO und die Treiberstufe DR erzeugt wurde, sowie mit der Konfiguration der Ultraschall-Sensoreinheit 12, die bevorzugt durch die Steuereinrichtung CTR eingestellt wird. Beispielsweise ist es denkbar, analoge Filter, Pegel, Verstärkungen etc. an die vorgegebenen Stimuli, Nutz-, Mess- und Prüfsignale fallspezifisch anzupassen. Diese Anpassung wird bevorzugt durch die Steuereinrichtung CTR kontrolliert. Der analoge Eingangsschaltkreis AS erzeugt in Abhängigkeit von dem vierten analogen Signal S4 das fünfte digitale Signal S5. Der analoge Eingangsschaltkreis AS hat somit bevorzugt auch die Funktion eines Analog-zu-Digital-Wandlers ADC. Das fünfte digitale Signal S5 kann mehrere digitale Teilsignale umfassen. Auch hier sind nicht notwendigerweise alle Teilsignale des fünften digitalen Signals S5 in allen Zuständen der Ultraschall-Sensoreinheit 12 aktiv. Ein digitaler Multiplexer DMX leitet das fünfte digitale Signal S5 als sechstes digitales Signal S6 in einem vorgegebenen Zustand der Ultraschall-Sensoreinheit 12 durch. Welches Signal durch den digitalen Multiplexer DMX als sechstes Signal S6 durchgeschaltet wird, kann erneut vom Zustand der Ultraschall-Sensoreinheit 12 abhängen. Typischerweise wird der digitale Multiplexer DMX durch die Steuereinrichtung CTR gesteuert, die bevorzugt den Zustand der Ultraschall-Sensoreinheit 12 und dessen Konfiguration steuert und kontrolliert. Auch hier sind nicht notwendigerweise alle Teilsignale des sechsten digitalen Signals S6 in allen Zuständen der Ultraschall-Sensoreinheit 12 aktiv. Der digitale Eingangsschaltkreis DSI empfängt das sechste digitale Signal S6 und verarbeitet das sechste digitale Signal S6 in Abhängigkeit von dem Zustand der Ultraschall-Sensoreinheit 12. Wie der Empfang durch den digitalen Eingangsschaltkreis DSI exakt erfolgt, wird bevorzugt durch die Steuereinrichtung CTR mittels entsprechender, nicht eingezeichneter Steuersignale vorgegeben. Bevorzugt korreliert die Empfangsmethodik im digitalen Eingangsschaltkreis DSI mit dem verwendeten Stimulus oder Mess- oder Prüfsignal, das durch die Digitalsignal-Erzeugungseinheit DSO und die Treiberstufe DR erzeugt wurde und mit der gewählten Empfangsmethodik im analogen Eingangsschaltkreis AS und der Konfiguration der Ultraschall-Sensoreinheit 12. Beispielsweise ist es denkbar, digitale Filter (insbesondere Matched-Filter) und digitale Signalverarbeitungsmethoden an die vorgegebenen Stimuli, Nutz-, Mess- und Prüfsignale und die gewählte Empfangsmethodik im analogen Eingangsschaltkreis AS fallspezifisch anzupassen. Diese Anpassung wird bevorzugt durch die Steuereinrichtung CTR kontrolliert. Der digitale Eingangsschaltkreis DSI erzeugt in Abhängigkeit von dem sechsten digitalen Signal S6 somit das siebte digitale Signal S7, dass bereits das Mess-Prüf- oder ein sonstiges Ergebnis umfassen sollte. Ein sonstiges Ergebnis kann beispielsweise auch eine Fehlermeldung an die Steuereinrichtung CTR sein. Die Steuereinrichtung CTR kann aber auch Mess- und Prüfergebnisse mit Sollwerten oder Toleranzintervallen für diese Sollwerte vergleichen und gegebenenfalls Fehlermeldungen erzeugen. Der digitale Eingangsschaltkreis DSI hat somit in vorbestimmten Zuständen des Messsystems nicht nur die Funktion einer Signalaufbereitung, sondern kann auch die Funktion einer Prüfvorrichtung für die dahingehende Überprüfung darstellen, dass die Signalverarbeitungskette der Ultraschall-Sensoreinheit 12 eine Antwort auf Stimuli der Digitalsignal-Erzeugungseinheit DSO liefert, die einem vorgegeben Wert oder einer vorgegebenen Signalfolge bei der bekannten Systemkonfiguration entspricht oder von einer solchen nicht mehr als vorgegeben abweicht. Auch hier sind nicht notwendigerweise alle Teilsignale des siebten digitalen Signals S7 in allen Zuständen des Messsystems aktiv.

### BEZUGSZEICHENLISTE

- 10: Fahrzeug
- 12: Ultraschall-Sensoreinheit
- 14: ausgesendeter Ultraschallpuls
- 16: Messobjekt
- 18: reflektierter Ultraschallpuls
- 20: Messignal
- 21: Nutzsignal
- 22: Peak
- 24: Rauschsignal
- 26: Nahbereich
- 28: erster Peak
- 30: Mehrfachreflexionenbereich
- 32: künstliches neuronales Netz
- 34: Trainingsdaten
- 36: Speichereinheit
- 100: Verfahren
- 110: erster Verfahrensschritt
- 120: zweiter Verfahrensschritt
- 130: dritter Verfahrensschritt
- 140: vierter Verfahrensschritt

## Patentansprüche

1. Verfahren (100) zur Abstandmessung unter Verwendung einer Ultraschall-Sensoreinheit (12), wobei das Verfahren (100) die nachfolgenden Schritte aufweist:
- Aussenden (110) von mindestens einem Ultraschallpuls (14) von der Ultraschall-Sensoreinheit (12) in Richtung eines Messobjektes (16);
- Empfangen (120) von mindestens einem, an dem Messobjekt (16) reflektierten Ultraschallpuls (18) durch die Ultraschall-Sensoreinheit (12);
- Erzeugen (130) eines Messsignals (20) auf Grundlage des mindestens einen empfangenen Ultraschallpulses (18);
- Auswerten (140) des Messsignals (20) und Bestimmen des Abstandes zwischen der Ultraschall-Sensoreinheit (12) und dem Messobjekt (16) unter Verwendung eines mittels Trainingsdaten trainierten Klassifikators oder Regressors.

2. Verfahren (100) nach Anspruch 1, **dadurch gekennzeichnet, dass** das Messsignal (20) ein ungefiltertes Amplitudensignal, ein Hüllkurvensignal und/oder ein IQ-Signal umfasst.

3. Verfahren (100) nach Anspruch 1 oder 2, **dadurch gekennzeichnet, dass** ein Klassifikator verwendet wird, der als ein künstliches neuronales Netz (32), eine Support Vector Machine oder als ein Entscheidungsbaum ausgebildet ist.

4. Verfahren (100) nach einem der Ansprüche 1 bis 3, **dadurch gekennzeichnet, dass** ein trainierte Klassifikator oder Regressor mit Trainingsdaten (34) trainiert ist, wobei die Trainingsdaten (34) Messsignale (20) sowie den Messsignalen (20) zugeordnete Abstandswerte aufweisen.

5. Verfahren (100) nach Anspruch 4, **dadurch gekennzeichnet, dass** die Trainingsdaten (34) Messignale (20) aufweisen, die jeweils ein ungefiltertes Amplitudensignal, ein Hüllkurvensignal oder ein IQ-Signal umfasst.

6. Verfahren (100) nach Anspruch 4 oder 5, **dadurch gekennzeichnet, dass** die Trainingsdaten (34) Messignale (20) sowie den Messignalen (20) zugeordnete Abstandswerte umfassen, wobei die Messignale (20) mehrere Peaks (22) aufweisen, die eine Mehrfachreflexion der durch die Ultraschall-Sensoreinheit (12) ausgesendeten Ultraschallspulse (14) darstellen.

7. Verfahren (100) nach einem der Ansprüche 1 bis 6, **dadurch gekennzeichnet, dass** das Verfahren (100) eingesetzt wird, um den Abstand zwischen einer Ultraschall-Sensoreinheit (12) und einem Messobjekt (16) in einem Nahbereich (26) zu bestimmen, wobei der Nahbereich (26) einen Abstand zwischen der Ultraschall-Sensoreinheit (12) und einem Messobjekt (16) in einem Bereich von 0 cm bis 50 cm, bevorzugt von 0 cm bis 20 cm und besonders bevorzugt von 0 cm bis 10 cm umfasst.

8. Verfahren (100) nach einem der Ansprüche 1 bis 7, **dadurch gekennzeichnet, dass** das Verfahren (100) zur Bestimmung eines Abstandes zwischen einem Fahrzeug (10) und einem Messobjekt (16) verwendet wird.

9. Verfahren (100) nach einem der Ansprüche 1 bis 8, **dadurch gekennzeichnet, dass** das Verfahren (100) als computerimplementiertes oder als maschinenimplementiertes Verfahren (100) realisiert ist.

10. Ultraschall-Sensoreinheit (12) zur Messung eines Abstandes zu einem Messobjekt (16), mit
- einer Sendeeinheit zum Aussenden von mindestens einem Ultraschallpuls (14);
- einer Empfangseinheit zum Empfangen von mindestens einem, an dem Messobjekt (16) reflektierten Ultraschallpuls (18); und
- einer Auswerteeinheit, die dazu ausgelegt ist:
- ein Messsignal (20) auf Grundlage des mindestens einen empfangenen Ultraschallpulses (18) zu erzeugen; und
- unter Verwendung eines mittels Trainingsdaten (34) trainierten Klassifikators oder Regressors das Messignal (20) auszuwerten und den Abstand zu dem Messobjekt (16) zu bestimmen.

11. Ultraschall-Sensoreinheit (12) nach Anspruch 10, **dadurch gekennzeichnet, dass** das Messsignal (20) ein ungefiltertes Amplitudensignal, ein Hüllkurvensignal oder ein IQ-Signal umfasst.

12. Ultraschall-Sensoreinheit (12) nach Anspruch 10 oder 11, **dadurch gekennzeichnet, dass** ein Klassifikator verwendet wird, der als ein künstliches neuronales Netz (32), eine Support Vector Machine oder als ein Entscheidungsbaum ausgebildet ist.

13. Ultraschall-Sensoreinheit (12) nach einem der Ansprüche 10 bis 12,
**dadurch gekennzeichnet, dass** der Klassifikator oder Regressor mit Trainingsdaten (34) trainiert ist, wobei die Trainingsdaten (34) Messignale (20) sowie den Messignalen (20) zugeordnete Abstandswerte umfassen, und die Messignale (20) mehrere Peaks (22) aufweisen, die eine Mehrfachreflexion der durch die Ultraschall-Sensoreinheit (12) ausgesendeten Ultraschallspulse (14) darstellen.

14. Ultraschall-Sensoreinheit (12) nach einem der Ansprüche 10 bis 13,
**dadurch gekennzeichnet, dass** die Auswerteeinheit dazu ausgelegt ist, den Abstand zu einem Messobjekt (16) in einem Nahbereich zu bestimmen, wobei der Nahbereich einen Abstand zwischen der Ultraschall-Sensoreinheit (12) und einem Messobjekt (16) in einem Bereich von 0 cm bis 50 cm, bevorzugt von 0 cm bis 20 cm und besonders bevorzugt von 0 cm bis 10 cm umfasst.

15. Computerprogrammprodukt, das Computeranweisungen aufweist, die von einer Recheneinheit ausführbar sind, wobei die Computeranweisungen bewirken, dass die Recheneinheit die Schritte eines der Verfahren (100) nach einem der Ansprüche 1 bis 9 durchführt, wenn sie durch die Recheneinheit ausgeführt werden.
